# EUROPÄISCHE PATENTANMELDUNG

(11) **EP 2 868 867 A1**
(43) Veröffentlichungstag der Anmeldung: **06.05.2015**
(21) Anmeldenummer: 13190714.9
(22) Anmeldetag: 29.10.2013
(51) Int. Cl.: F01D 5/18

(54) **Turbinenschaufel**

(71) Anmelder: Siemens Aktiengesellschaft, 80333 München (DE)
(72) Erfinder: Ahmad, Fathi, 41564 Kaarst (DE); Heselhaus, Andreas, 40235 Düsseldorf (DE); Radulovic, Radan, 44799 Bochum (DE)

(57) **Zusammenfassung**

Die Erfindung betrifft eine Turbinenschaufel (10) mit einem aerodynamischen Schaufelblatt (12), welches sich von einem fußseitigen Ende (14) zu einem kopfseitigen Ende erstreckt und welches zwei dazwischen erstreckende Schaufelblattwände (16, 18) umfasst, die sich quer dazu von einer gemeinsamen Vorderkante zu einer gemeinsamen Hinterkante (20) erstrecken und mit zumindest einer sich quer zum Schaufelblatt (12) erstreckenden Plattform (22), die an einem der beiden Enden (14) des Schaufelblatts (12) angeordnet ist, wobei in der Hinterkante (20) zwischen dem fußseitigen und dem kopfseitigen Ende eine Anzahl von Öffnungen (28, 32) vorgesehen ist. Um die thermomechanischen Belastungen in der Plattform (22) der Turbinenschaufel (10) zu reduzieren und somit eine langlebige Turbinenschaufel (10) zu erhalten, ist erfindungsgemäß vorgesehen, dass entweder die der Plattformoberfläche (30) am nächsten angeordneten Öffnung (32) der Hinterkante (20) sich bis in die Plattformoberfläche (30) hinein erstreckt oder dass die dem Schaufelblatt (12) zugewandte Plattformoberfläche (30) im Bereich derjenigen Öffnung (28), die der betreffenden Plattform (22) am nächsten ist, lokal abgesenkt ist und die betreffende Öffnung (32) dergestalt ist, dass sie in einen durch die Absenkung (34) frei gewordenen Hinterkanten-abschnitt (36) mündet.

## Beschreibung

Die Erfindung betrifft eine Turbinenschaufel mit einem aerodynamisch gekrümmten Schaufelblatt, welches sich von einem fußseitigen Ende zu einem kopfseitigen Ende erstreckt und welches zwei dazwischen erstreckende Schaufelblattwände umfasst, die sich quer dazu von einer gemeinsamen Vorderkante zu einer gemeinsamen Hinterkante erstrecken und mit zumindest einer sich quer zum Schaufelblatt erstreckenden Plattform, die an einem der beiden Enden des Schaufelblatts angeordnet ist, wobei in der Hinterkante zwischen dem fußseitigen Ende und dem kopfseitigen Ende eine Anzahl von Öffnungen vorgesehen ist.

Die eingangs bezeichnete Turbinenschaufel ist aus dem umfangreich vorhandenen Stand der Technik bestens bekannt und wird im Allgemeinen als eine Turbinenschaufel bezeichnet, bei der die im Inneren erforderliche Kühlluft zur Kühlung des Schaufelblatts an der Hinterkante zwischen Saugseitenwand und Druckseitenwand mittig ausgeblasen wird. Im Vergleich zur Hinterkante mit einem Cut-Back ist die Hinterkante mit mittiger Ausblasung dick ausgestaltet.

Es hat sich jedoch herausgestellt, dass stromab der Hinterkante plattformseitig Überhitzungserscheinungen auftreten können. Diese Überhitzungen können die Lebensdauer der Turbinenschaufel reduzieren.

Aufgabe der Erfindung ist daher die Bereitstellung einer langlebigen Turbinenschaufel mit einer mittigen Hinterkantenausblasung von Kühlluft.

Die der Erfindung zugrundeliegende Aufgabe wird jeweils mit einer Turbinenschaufel gemäß dem Patentanspruch 1 und gemäß dem Patentanspruch 2 gelöst.

Gemäß der ersten Lösung ist erfindungsgemäß vorgesehen, dass die der Plattformoberfläche am nächsten angeordnete Öffnung der Hinterkante sich bis in die Plattformoberfläche hinein erstreckt. Gemäß der zweiten Lösung ist vorgesehen, dass die dem Schaufelblatt zugewandte Plattformoberfläche im Bereich derjenigen Öffnung, die der betreffenden Plattform am nächsten ist, im Vergleich zu den benachbarten Bereichen der Plattform lokal abgesenkt ist und die betreffende Öffnung dergestalt ist, dass sie in einem durch die Absenkung freigewordenen Hinterkantenabschnitt mündet.

Beiden Erfindungen ist gemein, dass durch die Vergrößerung derjenigen Öffnung, die der Plattform am nächsten ist, eine verbesserte Kühlung der Plattform stromab der Hinterkante erreicht werden kann. Durch den verminderten Abstand bzw. durch den weggefallenen Abstand erfolgt die Ausblasung an Kühlluft derartig plattformnah, dass nahezu eine Filmkühlung der Plattform stromab der Hinterkante realisiert werden kann. Dies gilt insbesondere auch für andere Bereiche derjenigen Plattformen, die zu der betreffenden Turbinenschaufel benachbart sind, wenn die Turbinenschaufeln im Betrieb in einem Kranz angeordnet in der Gasturbine verwendet werden.

Mithin ist bei beiden Lösungen erfindungsgemäß vorgesehen, dass die Kühlluft noch wandnaher als bisher aus der Hinterkante ausgeblasen werden kann, was den Heißgaseinfluss des über die Plattform hinweg strömenden Heißgasmediums verringert. Dies reduziert die thermodynamische Belastung der Turbinenschaufel, wodurch die Lebensdauer der Turbinenschaufel erhöht werden kann.

Gemäß einer ersten vorteilhaften Weiterbildung der Erfindung weist die betreffende Öffnung einen größeren Ausströmquerschnitt auf als die anderen Öffnungen der Hinterkante. Damit wird erreicht, dass einerseits die Schaufelblattwände, die an der Hinterkante zusammenlaufen, und andererseits der stromab liegende Bereich der Hinterkante ausreichend gekühlt werden können.

Zweckmäßigerweise kann die Turbinenschaufel sowohl als Leitschaufel oder als Laufschaufel ausgebildet sein, entweder mit einer Plattform oder mit zwei Plattformen. Im letzteren Fall sind die Plattformen dann kopfseitig und fußseitig am Schaufelblatt angeordnet.

Wenn die Turbinenschaufel zumindest plattformoberflächenseitig mit einer wärmedämmenden Schutzschicht versehen ist, kann mit der erfindungsgemäßen Lösung diese gegebenenfalls sogar gegen ein durch übermäßige Dehnungen verursachtes Abplatzen geschützt werden, was ebenso die Lebensdauer der beschichteten Turbinenschaufel verlängert.

Weitere Vorteile und Merkmale der Erfindung werden anhand weiterer Ausführungsbeispiele näher erläutert.

Es zeigen:
- FIG 1: eine perspektivische Ansicht einer Hinterkante einer nur teilweise dargestellten Turbinenschaufel gemäß eines ersten Ausführungsbeispiels und
- FIG 2: ein zweites Ausführungsbeispiel einer erfindungsgemäßen Turbinenschaufel mit einer stromab der Hinterkante lokal abgesenkten Plattform.

In allen Figuren sind identische Merkmale mit identischen Bezugszeichen versehen.

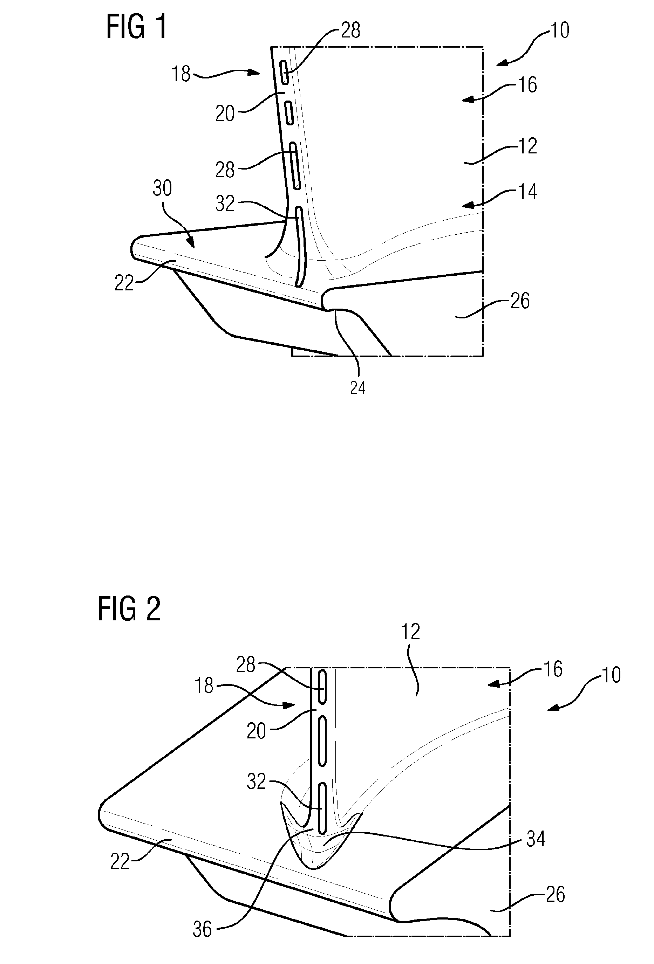

In FIG 1 ist eine Turbinenschaufel 10 teilweise dargestellt. Wie die aus dem Stand der Technik bekannten Turbinenschaufeln umfasst die dargestellte Turbinenschaufel 10 ein aerodynamisch gekrümmtes Schaufelblatt 12, welches sich von einem fußseitigen Ende 14 zu einem nicht dargestellten kopfseitigen Ende erstreckt und dabei sowohl eine druckseitige Schaufelblattwand 16 und eine dieser gegenüberliegenden saugseitigen Schaufelblattwand 18 umfasst, die sich - in Strömungsrichtung eines Heißgases - von einer nicht dargestellten gemeinsamen Vorderkante zu einer gemeinsamen Hinterkante 20 erstrecken. Am fußseitigen Ende 14 des Schaufelblatts 12 ist eine Plattform 22 angeordnet. An einer dem Schaufelblatt 12 abgewandten Seite 24 der Plattform 22 ist ein Schaufelfuß 26 vorgesehen, mit dessen Hilfe die Turbinenschaufel 10 an einer Tragstruktur befestigt sein kann. Wenn die Turbinenschaufel 10 als Laufschaufel ausgestaltet ist, handelt es sich bei der Tragstruktur meistens um eine Rotorscheibe oder um einen monolithischen Rotorblock. Ist dagegen die Turbinenschaufel 10 als Leitschaufel ausgestaltet, wird die Tragstruktur als Turbinenleitschaufelträger bezeichnet.

Entlang der Hinterkante 20 sind in dieser eine Anzahl von Öffnungen 28 vorgesehen, die über die Höhe des Schaufelblattes 12 zumeist gleichmäßigt verteilt angeordnet sind. Gemäß dem in FIG 1 dargestellten ersten Ausführungsbeispiel der Erfindung ist die der Plattformoberfläche 30 am nächsten angeordnete Öffnung 32 dergestalt, dass sie sich bis in die Plattformoberfläche 30 hinein erstreckt. Somit liegt ein Teil des Auslassquerschnitts der betreffenden Öffnung 32 in der Hinterkante 20 und ein anderer Teil des Auslassquerschnitts in der Plattformoberfläche 30. Im Gegensatz dazu endete im Stand der Technik die Öffnung 32 oberhalb derjenigen gedachten Ebene, welche mit der Plattformoberfläche 30 zusammenfällt.

In FIG 2 ist ein zweites Ausführungsbeispiel der Erfindung gezeigt, wobei die zu FIG 1 identischen Merkmale hier ebenso bezeichnet sind. Im Unterschied zu dem ersten Ausführungsbeispiel ist jedoch gemäß dem zweiten Ausführungsbeispiel die Plattformoberfläche 30 stromab der Hinterkante 20 lokal geringfügig abgesenkt, wodurch eine vergleichsweise kleine Absenkung 34 entsteht. Verglichen mit der Hinterkante 20 aus dem ersten Ausführungsbeispiel ist die Hinterkante 20 des zweiten Ausführungsbeispiels plattformseitig geringfügig verlängert. Diese Verlängerung wird nachfolgend als Hinterkantenabschnitt 36 bezeichnet. Gemäß dem in FIG 2 gezeigten Ausführungsbeispiel ist diejenige Öffnung 32, die der Plattform 22 am nächsten ist, dergestalt, dass sie in einem durch die Absenkung 34 frei gewordenen Hinterkantenabschnitt 36 mündet. Ein Teil der plattformnächsten Öffnung 32 liegt somit unterhalb derjenigen Ebene, die mit der Plattformoberfläche 30 größtenteils zusammenfällt.

Insgesamt betrifft die Erfindung somit eine Turbinenschaufel 10 mit einem aerodynamischen Schaufelblatt 12, welches sich von einem fußseitigen Ende 14 zu einem kopfseitigen Ende erstreckt und welches zwei dazwischen erstreckende Schaufelblattwände 16, 18 umfasst, die sich quer dazu von einer gemeinsamen Vorderkante zu einer gemeinsamen Hinterkante 20 erstrecken und mit zumindest einer sich quer zum Schaufelblatt 12 erstreckenden Plattform 22, die an einem der beiden Enden 14 des Schaufelblatts 12 angeordnet ist, wobei in der Hinterkante 20 zwischen dem fußseitigen und dem kopfseitigen Ende eine Anzahl von Öffnungen 28, 32 vorgesehen ist. Um die durch das Heißgas eingebrachten thermomechanischen Belastungen in der Plattform 22 der Turbinenschaufel 10 zu reduzieren und somit eine langlebige Turbinenschaufel 10 zu erhalten, ist erfindungsgemäß vorgesehen, dass entweder die der Plattformoberfläche 30 am nächsten angeordneten Öffnung 32 der Hinterkante 20 sich bis in die Plattformoberfläche 30 hinein erstreckt oder dass die dem Schaufelblatt 12 zugewandte Plattformoberfläche 30 im Bereich derjenigen Öffnung 28, die der betreffenden Plattform 22 am nächsten ist, lokal abgesenkt ist und die betreffende Öffnung 32 dergestalt ist, dass sie in einen durch die Absenkung 34 frei gewordenen Hinterkantenabschnitt 36 mündet.

## Patentansprüche

1. Turbinenschaufel (10) mit einern aerodynamisch gekrümmten Schaufelblatt (12), welches sich von einem fußseitigen Ende (14) zu einem kopfseitigen Ende erstreckt und welches zwei dazwischen erstreckende Schaufelblattwände (16,18) umfasst, die sich quer dazu von einer gemeinsamen Vorderkante zu einer gemeinsamen Hinterkante (20) erstrecken und
mit zumindest einer sich quer zum Schaufelblatt (12) erstreckenden Plattform (22), die an einem der beiden Enden des Schaufelblattes (12) angeordnet ist,
wobei in der Hinterkante (20) zwischen dem fußseitigen Ende (14) und dem kopfseitigen Ende eine Anzahl von Öffnungen (28, 32) vorgesehen ist,
**dadurch gekennzeichnet, dass**
die der Plattformoberfläche (30) am nächsten angeordnete Öffnung (32) der Hinterkante (20) sich bis in die Plattformoberfläche (30) hinein erstreckt.

2. Turbinenschaufel (10) mit einem aerodynamisch gekrümmten Schaufelblatt (12), welches sich von einem fußseitigen Ende (14) zu einem kopfseitigen Ende erstreckt und welches zwei dazwischen erstreckende Schaufelblattwände (16,18) umfasst, die sich quer dazu von einer gemeinsamen Vorderkante zu einer gemeinsamen Hinterkante (20) erstrecken und
mit zumindest einer sich quer zum Schaufelblatt (12) erstreckenden Plattform (22), die an einem der beiden Enden des Schaufelblattes (12) angeordnet ist,
wobei in der Hinterkante (20) zwischen dem fußseitigen Ende (14) und dem kopfseitigen Ende eine Anzahl von Öffnungen (28) vorgesehen ist,
**dadurch gekennzeichnet, dass**
die dem Schaufelblatt (12) zugewandte Plattformoberfläche (30) im Bereich derjenigen Öffnungen (32), die der betreffenden Plattform (22) am nächsten ist, lokal absenkt ist, und die betreffende Öffnung (28) dergestalt ist, dass sie in einem durch die Absenkung (34) frei gewordenen Hinterkantenabschnitt (36) mündet.

3. Turbinenschaufel (10) nach Anspruch 1 oder 2,
bei der die betreffende Öffnung (32) einen größeren Ausströmquerschnitt aufweist als die anderen Öffnungen (28).

4. Turbinenschaufel (10) nach einem der Ansprüche 1, 2 oder 3,
deren Plattform beschichtet ist.

5. Turbinenschaufel (10) nach einem der Ansprüche 1, 2, 3 oder 4,
welche als Leitschaufel oder als Laufschaufel ausgebildet ist.
